# EUROPÄISCHE PATENTSCHRIFT

(11) **EP 1 882 851 B1**
(45) Veröffentlichungstag und Bekanntmachung des Hinweises auf die Patenterteilung: **09.11.2016**
(21) Anmeldenummer: 07120659.3
(22) Anmeldetag: 12.09.2002
(51) Int. Cl.: F03D 1/00, F03D 80/00, F03D 13/20

(54) **Verfahren zur Errichtung einer Windenergieanlage, Windenergieanlage**
Wind energy plant and method for erecting the same.
Procédé d'installation d'une éolienne et éolienne en soi

(30) Priorität: 14.09.2001 DE 10145414
(43) Veröffentlichungstag der Anmeldung: 30.01.2008
(62) Teilanmeldung aus: 04016488.1
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 675 246
- DE-U- 29 518 899
- DK-U3- 9 700 453
- ORLHAC M: "LE POSTE SOCLE DANS LA MISE EN SOUTERRAIN DES RESEAUX RURAUX", REVUE GENERALE DE L'ELECTRICITE, RGE. PARIS, FR, Nr. 4, 1. April 1993 (1993-04-01), Seiten 23-25, XP000355859, ISSN: 0035-3116

## Beschreibung

Die Erfindung betrifft ein Verfahren zur Errichtung einer Windenergieanlage sowie die Windenergieanlage in ihrer Ausgestaltung selbst.

Bisher wird bei der Errichtung von Windenergieanlagen zunächst ein Fundament erstellt, dann der Turm der Windenergieanlage errichtet und anschließend das Maschinenhaus an der Turmspitze ausgerüstet und der Rotor mit den Rotorblättern angebracht. Hiernach werden die elektrischen Leistungsmodule wie der Transformator, Schaltschränke, gegebenenfalls Wechselrichter, Mittelspannungsanlage, Niederspannungsverteilung usw. installiert. Dies geschieht fast immer in einem eigenen kleinen Gebäude außerhalb der Windenergieanlage.

In DE 198 16 483.1 ist bereits auch schon vorgeschlagen worden, den Transformator innen im Turm unterzubringen, so dass es der Errichtung eines eigenen Trafogebäudes mit eigenem Fundament nicht mehr bedarf. Aus DK 2000 00086 ist eine Windenergieanlage mit einem in die Windenergieanlage eingebauten Leistungsmodul bekannt, welches bereits vor Errichtung des Turms der Windenergieanlage gesetzt werden kann. Aus US 4,772,999 ist ein Statikumrichter bekannt, welcher besonders für die abbrechungsfreie elektrische Leistungsversorgung geeignet ist. Dieser Statikkonverter soll dabei besonders kompakt sein. Aus Erich Hau, Windkraftanlagen, 1996, Seiten 295 bis 311, ist die Konzeption von drehzahlvariablen Generatorsystemen für Windenergieanlagen bekannt, insbesondere ist dort bekannt, dass einem Asynchrongenerator ein Gleichrichter nachgeschaltet ist, welchem ein Wechselrichter nachgeschaltet ist und dieser Wechselrichter ist dann mit einem Transformator verbunden, mittels dem dann die elektrische Leistung der Windenergieanlage in das Netz eingespeist wird (Bild 9.17 auf Seite 296).

Aufgabe der Erfindung ist es nun, ein Verfahren zu entwickeln, mittels dem die Errichtung von Windenergieanlagen noch günstiger, vor allem aber auch schneller vorgenommen werden kann.

Die Aufgabe wird mit einem Verfahren mit den Merkmalen nach Anspruch 1 und einer Windenergieanlage mit den Merkmalen nach Anspruch 2 gelöst. Vorteilhafte Weiterbildungen sind in den Unteransprüchen beschrieben.

Erfindungsgemäß wird vorgeschlagen, abweichend von der bisherigen Konstruktion von Windenergieanlagen, nach Errichtung des Fundaments der Windenergieanlage die wesentlichen Leistungsmodule, also Trafo, Schaltschränke usw. auf dem Fundament zu platzieren und erst danach den Turm zu errichten, so dass die gesamten Leistungsmodule nach Errichtung des Turms im Bereich des Turmfundamentes bzw. im unteren Teil des Turms geschützt sind und sicher auf dem Turmfundament ruhen.

Die Leistungsmodule sind soweit wie möglich bereits vorgefertigt und auf Trägern montiert, so dass durch einen Kran, den man ohnehin zur Errichtung einer Windenergieanlage benötigt, die Leistungsmodule auf dem Turmfundament aufgestellt werden können und die gesamte Betriebsfertigung, insbesondere das Verlegen von Kabeln sowie die gesamte Betriebsvorbereitung der Windenergieanlage durch Einstellung einzelner Steuerungsmodule, Einrüstung der Schaltschränke etc. in einem geschützten Raum stattfinden kann und mit diesen Tätigkeiten begonnen werden kann, nachdem der Turm errichtet wurde.

Besonders vorteilhaft ist es auch, wenn die Träger der Leistungsmodule Stützfüße aufweisen, die wiederum auf vorpositionierten Platten auf dem Turmfundament ruhen. Diese Platten werden bereits bei der Erstellung des Fundaments vor bestimmten Positionen eingelassen und mit dem Fundament fixiert, so dass auch eine spätere Aufstellung der Leistungsmodule auf sehr einfache Art und Weise vorgenommen werden kann.

Schließlich ist es auch sehr vorteilhaft, wenn für die Kabel, die aus der Windenergieanlage herausführen, also insbesondere die Stromübertragungskabel, Steuerungskabel etc. Leerrohrtraversen im Fundament der Windenergieanlage vorgesehen sind und diese Leerrohrtraversen in vorbestimmten Positionen fixiert liegen. Hierzu werden die Traversen mittels Haltearmen, die ihrerseits wiederum in Teilen des Fundaments oder in der untersitzenden Sektion eines Turmes fixiert sind, gehalten. Durch diese Leerrohrtraversen kann der Bereich der Kabelzuführung exakt vorbestimmt werden und vor allem auch so gelegt werden, dass die Kabel, die aus dem Leistungsmodul in das Fundament reichen, über einen kürzesten und optimalen Kabelweg verfügen.

Die erfindungsgemäßen Maßnahmen erleichtern also auch die gesamte elektrische Einrichtung der Windenergieanlage durch eine Vorfertigung von einzelnen Modulen wie den Leerrohrtraversen, Leistungsmodulträgern etc. bereits bei der Fundamenterrichtung.

Mit den erfindungsgemäßen Maßnahmen lässt sich die gesamte Errichtungszeit der Windenergieanlage deutlich verkürzen. Auch lassen sich mit der Erfindung die Kosten für die gesamte Errichtung der Windenergieanlage verringern, ohne dass irgendwelche technischen Nachteile in Kauf genommen werden müssen.

Die Erfindung wird nachfolgend anhand eines in einer Zeichnung ausgeführten Beispiels näher erläutert.

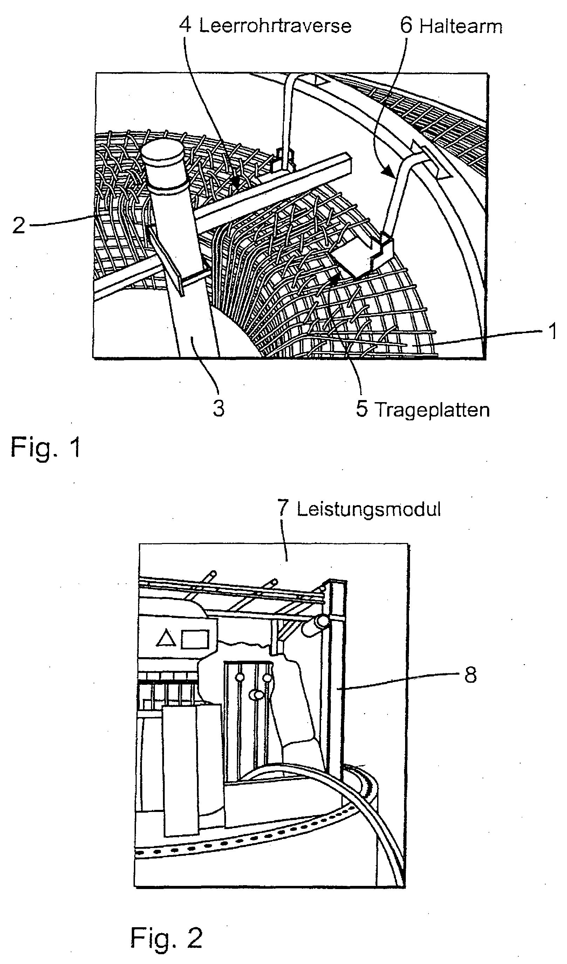

Figur 1 zeigt eine Aufsicht auf ein voreingerichtetes Fundament (ohne Betonfüllung) mit einer Stahlarmierung 1 und 2, an einem Leerrohr 3, welches über eine Verstrebung 4 mit einer an die Armierung angrenzende unterste Turmsektion gehalten wird. Ferner sind Tragplatten 5 zu erkennen, die für Haltearme 6 in der untersten Turmsektion, (die später nach der Errichtung der Windenergieanlage nicht mehr zu sehen ist) angebracht sind.

Das Leerrohr 3 dient später zur Aufnahme von Kabeln, beispielsweise der Stromkabel, über die die gesamte elektrische Energie der Windenergieanlage zum Netz über Erdkabel abgeführt wird. Hierzu ist oftmals nicht nur ein einziges Rohr, sondern mehrere Rohre vorgesehen.

Figur 2 zeigt die Fundamentsektion nach Einfüllung des Betons. Hierbei ist zu sehen, dass die Leerrohre in ihrer vorfixierten Position verbleiben und auch die Tragplatten mit einbetoniert sind, wobei beim Betonieren darauf zu achten ist, dass die Tragplatten satt auf dem Konstruktionsbeton aufliegen und so einen flächigen Lastabtrag gewährleisten. Der Beton reicht bis zur Oberkante der Tragplatten und ist sorgfältig an den Plattenrand angearbeitet.

Nach Aushärtung des Betons können die Haltearme zum Halten der Tragplatten wie auch die Traversen zur Fixierung der Leerrohre abmontiert und für die Errichtung weiterer Anlagen wiederverwendet werden.

Nach dem Aushärten des Betons wird zur weiteren Errichtung der Windenergieanlage nicht - wie bis dahin üblich - der Turm auf das unterste Fundament für die Turmsektion aufgesetzt, sondern es wird zunächst ein Leistungsmodul 7 auf die Tragplatten 5 gestellt (Figuren 2, 3 und 4).

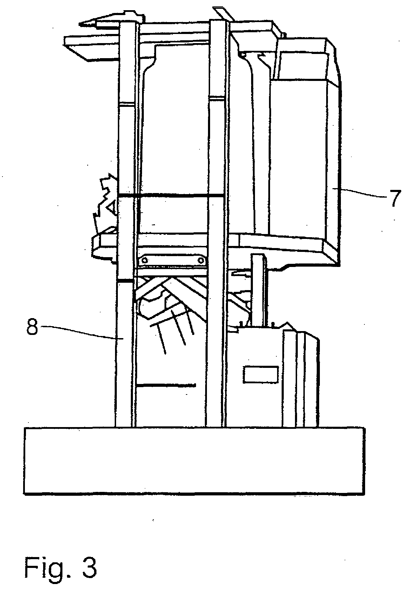

Ein solches Leistungsmodul 7 ist in Figur 3 in einer zweiteiligen Ausführung gezeigt, wobei das Leistungsmodul auch aus weiteren Teilen bestehen kann.

Die beiden Teile des Leistungsmoduls 7 sind im dargestellten Beispiel übereinander gestellt und das gesamte Leistungsmodul besteht aus zwei übereinandergestellten Trägern 8, die ihrerseits wiederum wesentliche Teile der Leistungsmodule aufnehmen, also beispielsweise den Transformator, Wechselrichter, Schaltschränke, Mittelspannungsanlage etc..

Die übereinandergestellten Träger 8 sind nach Art eines Rahmens aufgebaut und passen exakt übereinander, so dass auch eine zuverlässige Befestigung gegeneinander gewährleistet ist.

Die einzelnen Träger weisen unter anderem vier - ein Rechteck aufspannende - vertikal ausgerichtete Holme auf, die untereinander verbunden sind. Diese Holme sind an ihrer Unter- und Oberseite miteinander verschraubt.

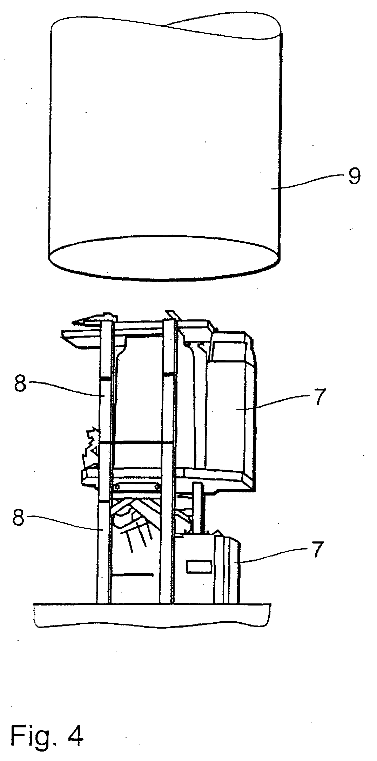

Nach der Aufstellung des elektrischen Leistungsmoduls auf dem Fundament wird der Turm 9 errichtet (Figur 4) und hierbei über das Leistungsmodul gestülpt. Dazu sind die äußeren Abmaße des Leistungsmoduls hinsichtlich Breite und Länge geringer als der Innendurchmesser des Turms im unteren Turmbereich/Fundamentbereich.

Nach Errichtung des Turms wird die Windenergieanlage wie üblich mit dem Maschinenhaus ausgestattet, der Rotor wird montiert und für die Inbetriebnahme werden entsprechende elektrische Verbindungen zwischen dem Generator und dem Leistungsmodul 7 hergestellt und es erfolgt auch der Anschluss des Leistungsmoduls (Ausgang des Transformators) an das Stromversorgungsnetz.

Wenn die vorbeschriebenen Leerrohre bzw. für die Kabeldurchführung vorgesehenen Einrichtungen in bestimmter vorbeschriebener Position vorfixiert sind, kann auch die Verbindung zwischen dem Leistungsmodul und dem Netz äußerst schnell und günstig hergestellt werden, wobei die Kabellängen insgesamt minimal sind, weil die Leerrohre dort positioniert sind, wo sie genau zur Anlage mit den entsprechenden Teilen des Leistungsmoduls kommen.

Bei der erfindungsgemäßen Windenergieanlage ist es auch vorteilhaft, wenn der Zugang der Windenergieanlage nicht mehr unbedingt im festen Fundamentbereich durch eine übliche Tür erfolgt, sondern durch eine Tür (Zugang), die so positioniert ist, dass sie in den Bereich oberhalb der Hoch- oder Mittelspannung führenden Teile des Leistungsmoduls mündet. Hierzu kann an der Außenseite des Turms eine entsprechende Leiter oder Treppe vorgesehen sein. Diese Positionierung der Zugangstür hat den Vorteil, dass das Personal, welches die Anlage häufiger betreten muss, sich nicht stets an den Hoch- oder Mittelspannung führenden Teilen des Leistungsmoduls vorbei bewegen muss, während die Anlage in Betrieb ist. Damit wird auch sichergestellt, dass nicht unvorhergesehenerweise oder aus Versehen während des Betriebs der Windenergieanlage jemand sich in unmittelbarer Nähe des Leistungsmoduls befindet und hierbei in Berührung mit spannungs- oder stromgeführten Teilen kommt, was einen großen Unfall verursachen könnte.

Im Bereich der Zugangstür des Turms ist dann eine entsprechende Zwischenplattform vorgesehen, die das Personal, welches den Turm betritt, begehen kann, um dann im Inneren des Turms weiter in die Windenergieanlage hoch zu steigen oder an verschiedenen Steuereinrichtungen Einstellungen vorzunehmen oder auch Messdaten abzulesen.

Bei einer Windenergieanlage des erfindungsgemäßen Typs handelt es sich um eine solche, die regelmäßig über mehr als 100 kW Nennleistung verfügt, vorzugsweise eine Nennleistung im Bereich von 500 kW, 1 MW, 1,5 MW oder deutlich mehr aufweist. Bevorzugt ist die Zwischenplattform mit einer verschließbaren Platte versehen, durch die das Personal in den unteren Bereich des Leistungsmoduls einsteigen kann. Mit dem Verschluss der Klappe ist eine weitere Sicherung des unteren Teils des Leistungsmoduls gegen unbefugten Zugriff gewährleistet.

Der innere Durchmesser des Turms im Fundamentbereich kann dabei mehrere Meter betragen, so dass auch die gesamte Fläche dort z.B. 100 m² oder mehr beträgt und daher auch eine ausreichend große Fläche zur Aufnahme der Leistungsmodule zur Verfügung steht. Soweit in dieser Anmeldung der Begriff "Leistungsmodul" verwendet wird, so ist damit der Mittel- bzw. Hochspannungsführende Teil der Windenergieanlage gemeint. Dies sind insbesondere die Aggregate wie Transformator oder Wechselrichter oder Notschalter sowie der Mittelspannungsschaltschrank oder auch die Niederspannungsverteiler.

## Patentansprüche

1. Verfahren zur Errichtung einer Windenergleanlage mit einem Turm (9), der auf einem Fundament gründet sowie einem elektrischen Leistungsmodul (7), im Wesentlichen bestehend aus einem Transformator und gegebenenfalls einem Wechselrichter oder anderen elektrischen Einrichtungen, wie z.B. Schaltschränken, die zur Steuerung der Windenergieanlage und/oder zur Durchleitung der elektrischen Leistung, die vom Generator der Windenergieanlage zur Verfügung gestellt und in ein Netz eingespeist wird, vorgesehen ist und wobei die Breite und/oder Länge des Leistungsmoduls geringer sind als der Durchmesser des Turms der Windenergieanlage im Fundamentbereich, **dadurch gekennzeichnet, dass** das Leistungsmodul (7) vor Errichtung des Turms auf dem Turmfundament gelagert wird und das Leistungsmodul zwei übereinander gestellte Träger aufweist (8), die ihrerseits wesentliche Teile des Leistungsmoduls aufnehmen und dass die übereinander gestellten Träger nach Art eines Rahmens aufgebaut sind und exakt übereinander passen, so dass auch eine zuverlässige Befestigung der Träger gegeneinander gewährleistet ist.

2. Windenergieanlage bestehend aus einem Turm (9), welcher auf einem Fundament gründet und einem Leistungsmodul (7), wobei das Leistungsmodul (7) wenigstens einen Transformator aufweist, mittels dem die elektrische Energie, die vom Generator der Windenergieanlage zur Verfügung gestellt wird, auf eine mittlere und/oder Hochspannung transformiert wird, dass das Leistungsmodul (7) darüber hinaus weitere Einheiten enthält, mittels denen die elektrische Energie, die vom Generator der Windenergieanlage bereitgestellt wird, gesteuert und/oder geleitet wird, und/oder aufgewertet, und dass Breite und/oder Länge des Leistungsmoduls (7) geringer sind als der Durchmesser des Turms (9) der Windenergieanlage im Fundamentbereich, **dadurch gekennzeichnet, dass** das Leistungsmodul zwei übereinander gestellte Träger (8) aufweist, die auf das Fundament der Windenergieanlage aufgesetzt sind und die ihrerseits wesentliche Teile des Leistungsmoduls (7) aufnehmen, und dass die übereinander gestellten Träger nach Art eines Rahmens aufgebaut sind und exakt übereinander passen, so dass auch eine zuverlässige Befestigung der Träger (8) gegeneinander gewährleistet ist.

3. Windenergieanlage nach Anspruch 2, **dadurch gekennzeichnet, dass** das Leistungsmodul (7) aus einem Transformator und einem Wechselrichter und wenigstens einem Schaltschrank zur Aufnahme von elektrischen Steuerungseinrichtungen der Windenergieanlagen besteht.

4. Windenergieanlage nach einem der vorhergehenden Ansprüche, **dadurch gekennzeichnet, dass** im Fundament der Windenergieanlage Leerrohre (3) zur Aufnahme von Kabeln angeordnet sind und die Leerrohre vor der Feststellung des Fundaments mit den Traversen fixiert sind.

## Claims

1. A method for construction of a wind energy plant having a tower (9) which is based on a foundation and also an electrical power module (7) essentially consisting of a transformer and optionally an inverter or other electrical devices, such as switchgear cabinets, which is intended for controlling the wind energy plant and/or for passing on the electrical power which is provided by the generator of the wind energy plant and is fed into a grid system, and wherein the width and/or length of the power module are/is less than the diameter of the tower of the wind energy plant in the foundation area, **characterised in that** the power module (7) is mounted on the tower foundation before the construction of the tower and the power module has two supports (8) placed one above the other, which in turn accommodate essential parts of the power module, and **in that** the supports which are placed one above the other are constructed in the manner of a frame and fit exactly over one another, so that reliable attachment of the supports to one another is also ensured.

2. A wind energy plant consisting of a tower (9) which is based on a foundation, and a power module (7), wherein the power module (7) has at least one transformer by means of which the electrical power which is provided by the generator of the wind energy plant is transformed to a medium and/or high voltage, that the power module (7) furthermore contains further units by means of which the electrical power which is provided by the generator of the wind energy plant is controlled and/or passed on, and/or is upgraded, and that the width and/or length of the power module (7) are/is less than the diameter of the tower (9) of the wind energy plant in the foundation area, **characterised in that** the power module has two supports (8) placed one above the other, which are placed on the foundation of the wind energy plant and which in turn accommodate essential parts of the power module (7), and **in that** the supports which are placed one above the other are constructed in the manner of a frame and fit exactly over one another, so that reliable attachment of the supports (8) to one another is also ensured.

3. A wind energy plant according to Claim 2, **characterised in that** the power module (7) consists of a transformer and an inverter and at least one switchgear cabinet for accommodating electrical control devices of the wind energy plants.

4. A wind energy plant according to one of the preceding claims, **characterised in that** empty conduits (3) for accommodating cables are arranged in the foundation of the wind energy plant, and the empty conduits are fixed to the cross-members before the finishing of the foundation.

## Revendications

1. Procédé de construction d'une éolienne comprenant une tour (9), qui repose sur des fondations, comprenant également un module de puissance (7) électrique, constitué essentiellement d'un transformateur, et le cas échéant, d'un onduleur ou d'autres équipements électriques, tels que des armoires électriques, qui sont prévus afin de commander l'éolienne et/ou afin d'acheminer la puissance électrique, qui est fournie par le générateur de l'éolienne et qui est injectée dans un réseau, et sachant que la largeur et/ou la longueur du module de puissance sont inférieures au diamètre de la tour de l'éolienne dans la zone des fondations, **caractérisé en ce que** le module de puissance (7) est monté, avant que la tour ne soit construite, sur les fondations de la tour et le module de puissance présente deux supports (8) superposés qui reçoivent de leurs côtés des parties essentielles du module de puissance et **en ce que** les supports superposés sont installés comme un cadre et s'adaptent exactement l'un à l'autre de sorte qu'une fixation fiable des supports l'un contre l'autre soit aussi garantie.

2. Eolienne constituée d'une tour (9), qui repose sur des fondations, et d'un module de puissance (7), sachant que le module de puissance (7) présente au moins un transformateur, au moyen duquel l'énergie électrique, qui est fournie par le générateur de l'éolienne, est transformée en une tension moyenne et/ou élevée, sachant que le module de puissance (7) contient par ailleurs des unités supplémentaires, au moyen desquelles l'énergie électrique, qui est fournie par le générateur de l'éolienne, est commandée et/ou guidée et/ou valorisée, sachant que la largeur et/ou la longueur du module de puissance (7) sont inférieures au diamètre de la tour (9) de l'éolienne dans la zone des fondations, **caractérisée en ce que** le module de puissance présente deux supports (8) superposés qui sont placés sur les fondations de l'éolienne et qui reçoivent de leurs côtés des parties essentielles du module de puissance (7) et **en ce que** les supports superposés sont installés comme un cadre et s'adaptent exactement l'un à l'autre de sorte qu'une fixation fiable des supports (8) l'un contre l'autre soit aussi garantie.

3. Eolienne selon la revendication 2,
**caractérisée en ce que** le module de puissance (7) est constitué d'un transformateur et d'un onduleur et d'au moins une armoire électrique servant à recevoir des équipements de commande électriques des éoliennes

4. Eolienne selon l'une quelconque des revendications précédentes,
**caractérisée en ce que** des tubes vides (3) servant à recevoir des câbles sont disposés dans les fondations de l'éolienne et que les tubes vides sont fixés à l'aide de traverses avant l'élaboration des fondations
